# EUROPÄISCHE PATENTSCHRIFT

(11) **EP 2 196 308 B1**
(45) Veröffentlichungstag und Bekanntmachung des Hinweises auf die Patenterteilung: **04.10.2017**
(21) Anmeldenummer: 08021481.0
(22) Anmeldetag: 11.12.2008
(51) Int. Cl.: B32B 1/06, B32B 3/12, B32B 3/28, B32B 5/20, B32B 15/01, B61D 17/18, B32B 5/18

(54) **Sandwichplatte mit verbesserter Schallabsorption**
Sandwich plate with improved sound absorption
Plaque en sandwich à meilleure absorption acoustique

(43) Veröffentlichungstag der Anmeldung: 16.06.2010
(73) Patentinhaber: ALSTOM Transport Technologies, 93400 Saint-Ouen (FR)
(72) Erfinder: Ehlers, Niklas, Dipl.-Ing., 38690 Vienenburg (DE)
(74) Vertreter: Lavoix

(56) Entgegenhaltungen:
- EP-A- 1 149 691
- WO-A-00/68001
- WO-A-2008/125228
- DE-A1- 19 702 581
- US-A- 4 557 961

## Beschreibung

Die Verwendung von Sandwichplatten, die aus einer oder mehreren Deckschichten sowie einer trapezförmigen oder wellenförmigen Kernschicht bestehen, hat sich im Fahrzeugbau, bevorzugt im Schienenfahrzeugbau, seit vielen Jahren bewährt. Sie werden aufgrund ihrer hohen Stabilität zum Beispiel als Fußbodenplatten eingesetzt. Wie bei vielen anderen Anwendungsfällen auch, gibt es bei der Verwendung von Leichtbauplatten, zu denen auch die eingangs genannten Sandwichplatten gehören, einen Zielkonflikt zwischen Leichtbau und gutem Schallabsorptionsvermögen.

Ein Vorschlag zur Überwindung dieses Zielkonflikts ist aus der DE 20 45 277 bekannt. Dort wird ein schallreduzierender Fußboden für Schienenfahrzeuge beschrieben, bei dem zwischen der Kernschicht in Form eines Trapezblechs und der Deckschicht eine Matte aus einem schalldämpfenden Material vorgesehen_sind. Nachteilig an diesem schallreduzierenden Fußboden ist, dass die Dicke des Fußbodens, dort wo eine Schalldämmung erforderlich ist, größer ist als in Bereichen des Schienenfahrzeugs, in denen keine Schalldämmung erforderlich ist. Diese unterschiedlichen Dicken des Fußbodens verursachen bei der Herstellung eines Schienenfahrzeugs mit einem ebenen und absatzfreien Fußboden erhebliche Mehrkosten und sind daher unerwünscht.

Aus der US 4,557,961 und der EP 1 149 691 A1 sind Honeycomb-Strukturen bekannt, bei der die Wände der Waben senkrecht zu den Deckschichten verlaufen. Dadurch ergeben sich Hohlräume der Wabenstruktur, die von der oberen Deckschicht und der unteren Deckschicht verschlossen werden. Diese Wabenstruktur hat nur eine geringe Eigendämpfung.

Aus der WO 00/68001 ist eine wellpappeähnliche Struktur aus Kunststoff bekannt, die mit einem Füllmaterial gefüllt wird, um die Steifigkeit zu erhöhen.

Um die oben genannten Probleme zu umgehen, hat man bislang über die gesamte Fußbodenfläche Fußbodenplatten mit schalldämmenden Eigenschaften eingesetzt, auch wenn die Schalldämmung nur bereichsweise erforderlich ist. So kann beispielsweise über einem Drehgestell eines Schienenfahrzeugs oder in unmittelbarer Nähe eines Antriebsmotors eine Schalldämmung erforderlich sein und beispielsweise zwischen den Drehgestellen eines Schienenfahrzeugs, in denen keine Schallquellen vorhanden sind, eine Schalldämmung entbehrlich sein.

Wenn man nun die gesamte Fußbodenplatte des Schienenfahrzeugs mit einer Schalldämmung versieht, entstehen unnötige Kosten, da Leichtbauplatten mit Schalldämmung teurer sind als Leichtbauplatten ohne Schalldämmung.

Der Erfindung liegt die Aufgabe zugrunde, eine Sandwichplatte bereitzustellen, welche die genannten Nachteile des Standes der Technik vermeidet. Gleichzeitig soll der Aufbau des Schienenfahrzeugs, in dem die erfindungsgemäße Sandwichplatte verbaut wird, möglichst einfach sein.

Diese Aufgabe wird erfindungsgemäß bei einer Sandwichplatte mit mindestens einer Deckschicht und einer mit der mindestens einen Deckschicht verbundenen Kernschicht, wobei die Kernschicht voneinander abgetrennte Hohlräume aufweist, und mindestens ein Teil der Hohlräume mit einem schallabsorbierenden Material gefüllt ist, dadurch gelöst, dass als schallabsorbierendes Material ein Granulat aus einem feuerfestem Material, bevorzugt aus Sand eingesetzt wird. Bei der erfindungsgemäßen Sandwichplatte kann es sich um eine am Markt erhältliche Sandwichplatte aus Aluminium oder Stahl handeln, bei der die Kernschicht aus gewelltem oder trapezförmigem Blech hergestellt wird. Solche Sandwichplatten werden beispielsweise von der Firma Metawell GmbH unter den Produktbezeichnung Metawell in verschiedensten Ausführungen angeboten.

Dabei verfügt diese Sandwichplatte über parallel zueinander angeordnete und voneinander getrennte prismatische Hohlräume. Erfindungsgemäß ist nun vorgesehen, mindestens einen Teil dieser Hohlräume mit einem schalldämmenden Material zu füllen. Dabei werden bevorzugt nur die Hohlräume gefüllt, die sich später am Einbauort in unmittelbarer Nähe einer Schallquelle befinden. Dadurch, dass bevorzugt nur die in unmittelbarer Nähe der Schallquelle befindlichen Hohlräume mit schallabsorbierendem Material gefüllt werden, ergibt sich dort mit minimalem Materialeinsatz und sehr geringen Kosten eine sehr wirkungsvolle Schalldämmung.

So können beispielsweise die Hohlräume, die sich in eingebautem Zustand der Sandwichplatte direkt über einem Drehgestell eines Schienenfahrzeugs befinden, mit einem schallabsorbierenden Material gefüllt werden. In den anderen Bereichen der Sandwichplatte, die sich in eingebautem Zustand nicht in unmittelbarer Nähe einer Schallquelle befinden, kann häufig auf die Schalldämmung verzichtet werden. Dadurch ist es möglich, ohne Änderungen der äußeren Abmessungen der handelsüblichen Sandwichplatte lokal und bedarfsorientiert das Schallabsorptionsvermögen der Sandwichplatte gezielt zu verbessern.

Die Erfindung erlaubt es, handelsübliche Platten hinsichtlich ihrer Schalldämmung auf den Einsatzzweck beziehungsweise die spezielle Anwendung hin maßzuschneidern und dadurch bei geringsten Kosten optimale Schalldämmungseigenschaften zu erzielen.

Es hat sich als vorteilhaft erwiesen, wenn eine zweite Deckschicht vorgesehen ist und die zweite Deckschicht ebenfalls mit der Kernschicht verbunden ist. Dann ergibt sich eine Sandwichplatte, die einen Querschnitt vergleichbar einer Wellpappe hat. Dadurch ergibt sich eine sehr hohe Biegesteifigkeit und Festigkeiten der Sandwichplatte. Durch die Tatsache, dass bei einer Sandwichplatte mit zwei Deckplatten die Zahl der Hohlräume vergrößert wird, ermöglicht außerdem ein nochmals verbessertes Schallabsorptionsvermögen der erfindungsgemäßen Sandwichplatte.

Bei mechanisch besonders stark beanspruchten Sandwichplatten ist es auch möglich, die Sandwichplatte mehrlagig aufzubauen, das heißt mit insgesamt zwei Deckschichten, zwei Kernschichten und einer zwischen den Kernschichten angeordneten Mittelschicht , so dass sich die Bauhöhe und damit auch die Biegefestigkeit der Sandwichplatte erhöht.

Selbstverständlich stehen dadurch noch mehr Hohlräume zur Verfügung, so dass durch das Befüllen dieser Hohlräume eine weiter verbesserte Schalldämmung erzielt werden kann.

Es hat sich als vorteilhaft erwiesen, als schallabsorbierendes Material einen Schaum, insbesondere einen Schaum auf Polyurethan-Basis einzusetzen. Solche Schäume sind einfach zu verarbeiten und haben ein einstellbares spezifisches Gewicht. Dadurch ist es möglich, die schallabsorbierenden Eigenschaften des Schaums an verschiedene Anwendungen anzupassen und dadurch die Schalldämmung zu optimieren.

Es sind am Markt auch schwer entflammbare PU-Schäume mit Zulassungen zur Verwendung im Bauwesen erhältlich. Solche Schäume sind beispielsweise unter der Produktbezeichnung "PUFS 750" und "FBS 02" der Fischer Werke GmbH am Markt erhältlich. Diese Schäume sind schwer entflammbar nach DIN 4102 und gehören zur Baustoffklasse B1.

Selbstverständlich ist die Erfindung nicht auf die Verwendung dieser Produkte beschränkt. Es ist vielmehr auch möglich, als schallabsorbierendes Material ein Granulat aus einem feuerfesten und gleichzeitig schallabsorbierenden Material wie beispielsweise Glasfaser oder Silikatfaserwolle, Sand, gemahlene Schlacke, Blei, Stahl Gummi oder anderes mehr vorgesehen sein. Es ist auch möglich, einen schalldämmenden Schaumstoff, der in Form eines Profils extrudiert wird, in die Hohlräume einzuziehen. Dabei kann man sich die Eigenschaft der Sandwichplatte zunutze machen, dass die Hohlräume prismatisch sind, so dass sie über die gesamte Länge einen konstanten Querschnitt haben. Dies erlaubt es relativ einfach, einen entsprechend geformten Schaum oder Kunststoffkörper in die Hohlräume einzubringen.

Wenn als schallabsorbierendes Material ein nicht feuerfester Schaum oder ein rieselfähiges Granulat eingesetzt wird, ist es in aller Regel erforderlich, die Hohlräume an ihren Enden durch geeignete Verschlussstopfen oder mit einer Verschlussleiste zu verschließen. Dadurch wird verhindert, dass sich der Schaum im Brandfall entzündet oder das Granulat während des Betriebs des Schienenfahrzeugs aus den Hohlräumen rieselt.

Weitere Vorteile und vorteilhafte Ausgestaltungen der Erfindung sind der nachfolgenden Zeichnung, deren Beschreibung und den Patentansprüchen entnehmbar. Alle in der Zeichnung, deren Beschreibung und den Patentansprüchen genannten Merkmale können sowohl einzeln als auch in beliebiger Kombination miteinander erfindungswesentlich sein.

In der Zeichnung zeigen:
- Figur 1: eine isometrische Darstellung eines ersten Ausführungsbeispiels einer erfindungsgemäßen Sandwichplatte,
- Figur 2: ein zweites Ausführungsbeispiel einer erfindungsgemäßen Sandwichplatte,
- Figur 3: ein Längsschnitt durch ein Anwendungsbeispiel einer erfindungsgemäßen Sandwichplatte und
- Figur 4: ein Einbaubeispiel einer erfindungsgemäßen Sandwichplatte in einem Schienenfahrzeug.

### Beschreibung der Ausführungsbeispiele

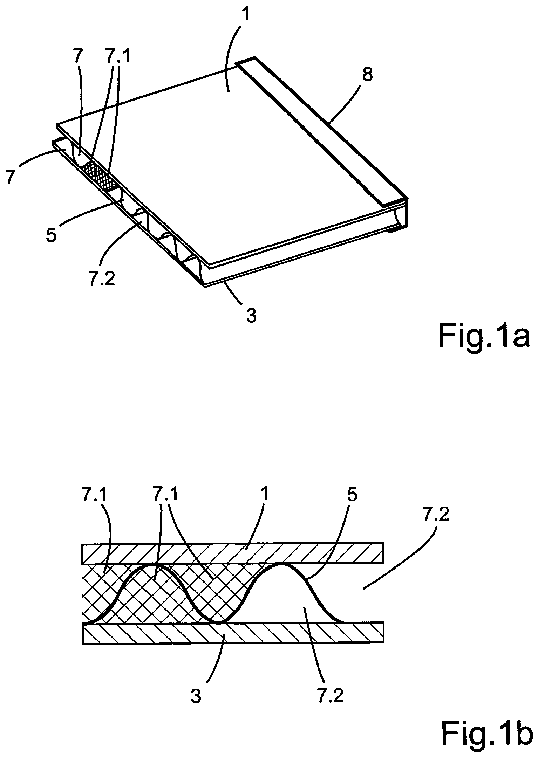

Figur 1 zeigt in einer isometrischen Darstellung ein erstes Ausführungsbeispiel einer erfindungsgemäßen Sandwichplatte mit lokal unterschiedlichen Schallabsorptionseigenschaften.

Die Sandwichplatte umfasst eine erste Deckschicht und eine parallel dazu verlaufende zweite Deckschicht 3. Zwischen der ersten Deckschicht 1 und der zweiten Deckschicht 2 ist eine wellenförmige Kernschicht 5 angeordnet. Die Kernschicht 5 ist beispielsweise durch Kleben fest mit den Deckschichten 1 und 3 verbunden. Im Ergebnis führt dies zu einer leichten und trotzdem sehr biegesteifen und hochfesten Sandwichplatte, wie sie beispielsweise im Schienenfahrzeugbau bereits mit Erfolg eingesetzt wird. Als Material für die Deckschichten 1, 3 und 5 sowie die Kernschicht 5 kann Aluminium oder Stahl eingesetzt werden.

Durch die Wellen der Kernschicht 5 und die Deckschichten 1 und 3 entstehen in der erfindungsgemäßen Sandwichplatte prismatische Hohlräume 7, die bei den im Handel befindlichen Sandwichplatten mit Luft gefüllt sind. Diese Sandwichplatten haben, aufgrund ihres geringen Gewichts, keine besonders guten Schallabsorptionseigenschaften. Erfindungsgemäß ist nun vorgesehen, mindestens einen Teil der Hohlräume 7 mit einem schallabsorbierenden Material zu füllen. Diese gefüllten Hohlräume haben das Bezugszeichen 7.1. Die Struktur dieser Sandwichplatte bringt es mit sich, dass die Hohlräume 7 untereinander nicht verbunden sind. Daher ist es möglich, gezielt und entsprechend dem lokal gewünschten Schallabsorptionsvermögen der Sandwichplatte einzelne Hohlräume 7.1 mit einem schallabsorbierenden Material zu füllen.

Dies ist insofern ein Vorteil, als es dadurch möglich ist, eine Auswahl der mit schallabsorbierendem Material zu füllenden Hohlräume zu treffen. Diese Auswahl kann insbesondere dadurch getroffen werden, dass nur die Hohlräume 7 mit einem schallabsorbierenden Material gefüllt werden, die sich am späteren Einbauort in unmittelbarer Nähe einer Schallquelle befinden. Dies bedeutet, dass in unmittelbarer Nähe einer Schallquelle die erfindungsgemäße Sandwichplatte sehr gute Schallabsorptionseigenschaften hat. An anderen Stellen, dort wo die Geräuschbelastung deutlich niedriger ist, kann auf eine Schalldämmung verzichtet werden. Im Ergebnis ist es dadurch möglich, eine Sandwichplatte bereitzustellen, mit lokal maßgeschneiderten Schallabsorptionseigenschaften. Dadurch wird erstens der Aufwand hinsichtlich Material und Kosten für die Schalldämmung minimiert und gleichzeitig ist es möglich, eine am Markt erhältliche Sandwichplatte auf die Erfordernisse des Einsatzzwecks beziehungsweise des Einbauorts anzupassen.

Dadurch dass sich die Abmessungen, insbesondere die Dicke der erfindungsgemäßen Sandwichplatte nicht ändert, wenn die Hohlräume 7 in der Kernschicht 5 mit einem schallabsorbierenden Material gefüllt sind, lässt sich auch der Einbau der erfindungsgemäßen Sandwichplatte in ein Schienenfahrzeug, einem Schiff oder einem anderen Einbauort, konstruktiv einfach bewerkstelligen. Es macht für die Abmessungen der Aufnahmen an dem umgebenden Bauwerk kein Unterschied, ob die Hohlräume 7 mit einem schallabsorbierenden Material gefüllt sind oder nicht.

Im unteren Teil der Figur 1b ist ein Teil-Querschnitt durch das Ausführungsbeispiel gemäß Figur 1a dargestellt. Dabei sind zwei Hohlräume 7.1 mit schallabsorbierendem Material gefüllt, während die benachbart dazu angeordneten Hohlräume 7.2 nicht mit schallabsorbierenden Material gefüllt sind.

Als schallabsorbierendes Material kann ein Schaum, insbesondere ein Schaum auf Polyurethanbasis, eingesetzt werden. Ein solcher Schaum kann gezielt in einzelne Hohlräume 7.1 der Kernschicht 5 eingespritzt werden, expandiert dort und füllt damit den gesamten Hohlraum 7.2 zwischen der Deckschicht 1 und dem wellenförmigen Blech 5 aus. Solche Schäume auf Polyurethanbasis, die mindestens schwerentflammbar sind, sind am Markt verfügbar, so dass auch dem Brandschutz Rechnung getragen ist. Es ist allerdings aus möglich, die Enden der Hohlräume mit Verschlussstopfen oder einer geeignet geformten Verschlussleiste abzuschließen, so dass auch dadurch den Anforderungen des Brandschutzes entsprochen wird. Als Verschlussleiste kann zum Beispiel ein Aluminium- oder Stahlleiste mit einem sogenannten C-Profil eingesetzt werden. Diese Leiste wird seitlich über die Sandwichplatte geschoben und kann dann mit den Decksichten 1 und 3 verklebt und/oder vernietet werden. Am rechten Ende der Sandwichplatte in Figur 1 ist eine Verschlussleiste 8 mit einem C-Profil dargestellt.

Wie aus der Figur 1b ersichtlich, ist die Dicke der ersten Deckschicht 1 größer als die der zweiten Deckschicht 3. Dies bedeutet, dass bezüglich der Trittfestigkeit und anderer Eigenschaften die erfindungsgemäße Sandwichplatte nicht nur hinsichtlich der Schallabsorptionseigenschaften, sondern auch hinsichtlich der mechanischen Festigkeit individuell an den vorgesehenen Einsatzzweck angepasst werden kann.

Alternativ zu den beschriebenen Schäumen auf PU-Basis können auch Granulate oder Streifen aus Mineralwolle oder anderen faserartigen Werkstoffen in die Hohlräume 7.1 eingebracht werden. Wenn als schallabsorbierendes Material ein Granulat eingesetzt wird, muss selbstverständlich an den Enden der Hohlräume durch eine Verschlussleiste 8 oder entsprechend geformte Verschlussstopfen das Herausrieseln dieses Granulats aus den Hohlräumen 7.1 verhindert werden.

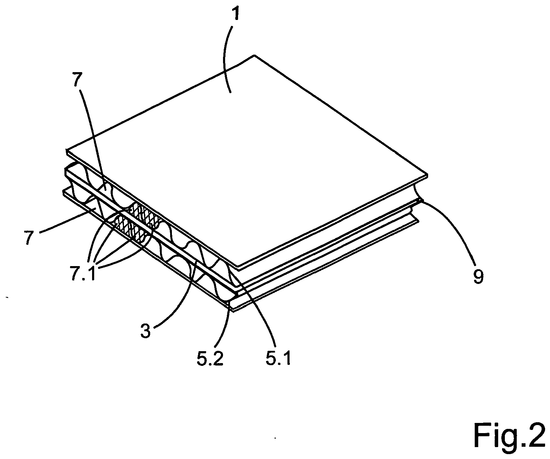

Figur 2 zeigt ein weiteres Ausführungsbeispiel einer erfindungsgemäßen Sandwichplatte. Bei diesem Ausführungsbeispiel sind zwischen der ersten Deckschicht 1 und der zweiten Deckschicht 3 zwei Kernschichten 5.1 und 5.2 vorgesehen. Zwischen den beiden Kernschichten 5.1 und 5.2 ist eine Mittelschicht 9 angeordnet. Dadurch ergibt sich eine erhöhte Biegesteifigkeit der Sandwichplatte und es besteht die Möglichkeit, beispielsweise in der ersten Kernschicht 5.1 ein anderes schallabsorbierendes Material einzusetzen als in der zweiten Kernschicht 5.2. Dadurch können auch unterschiedliche Frequenzbereiche des Schalls mit jeweils daraufhin optimierten schallabsorbierenden Materialien bestmöglichen gedämpft werden. Natürlich ergibt sich durch diesen insgesamt 5-lagigen Aufbau auch eine erhöhte mechanische Festigkeit der Sandwichplatte.

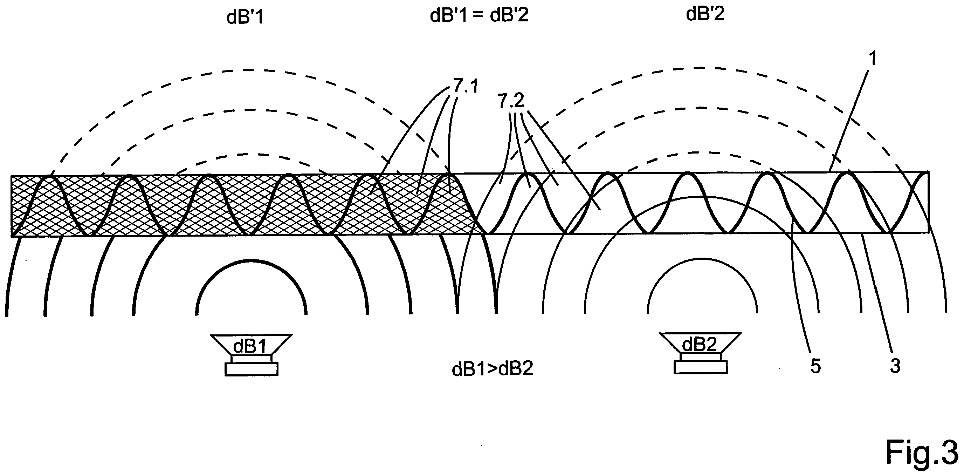

Figur 3 zeigt einen Längsschnitt durch eine erfindungsgemäße Sandwichplatte gemäß Figur 1. Auch aus diesem Längsschnitt ist gut zu erkennen, dass die Sandwichplatte aus einer ersten Deckschicht 3, einer zweiten Deckschicht 3 und einer dazwischen angeordneten in Form einer sinusförmigen Welle verlaufenden Kernschicht 5 besteht. Dieser Aufbau entspricht in seiner Struktur der sogenannten Wellpappe.

Im linken Teil der Figur 3 ist eine erste Schallquelle dB₁ dargestellt. Die erste Schallquelle dB₁ emittiert Schall mit einer hohen Intensität, was durch die konzentrischen Kreise mit einer großen Strichstärke unterhalb der Sandwichplatte angedeutet ist.

Im rechten Teil der Figur 3 ist eine zweite Schallquelle dB₂ dargestellt, die deutlich weniger Schall emittiert als die erste Schallquelle dB₁. Dies wird durch konzentrische Kreise mit entsprechend geringerer Strichstärke veranschaulicht.

Erfindungsgemäß ist nun vorgesehen, im linken Teil der Sandwichplatte die Hohlräume 7.1 mit einem schallabsorbierenden Material aufzufüllen, was durch eine entsprechende Schraffierung der Hohlräume 7.1 dargestellt ist. Infolgedessen hat die Sandwichplatte im linken Teil der Figur 3 ein hohes Schallabsorptionsvermögen, so dass ein Großteil des von der ersten Schallquelle SQ₁ emittierten Schalls in dem linken Teil der Sandwichplatte absorbiert wird und entsprechend der an der ersten Deckschicht 1 austretende Schallpegel dB₁' deutlich gegenüber dem ursprünglich von der ersten Geräuschquelle dB₁ emittierten Schallpegel reduziert wurde.

Im rechten Teil der Figur 3 ist in den Hohlräumen 7.2 der Sandwichplatte kein schallabsorbierendes Material vorgesehen, so dass dort die Schalldämmung der Sandwichplatte relativ gering ist. Dies bedeutet, dass ausgehend von einem geringeren Schalldruck der zweiten Schallquelle SQ₂ beim Durchtritt des Schalls durch die Sandwichplatte im rechten Teil nur eine geringe Dämpfung erfolgt, so dass der Schall der zweiten Schallquelle SQ₂ mit dem Schallpegel von dB₂' aus dem rechten Teil der Sandwichplatte austritt. Im Ergebnis sind bei dem grafisch dargestellten Ausführungsbeispiel der Figur 2 die Schallpegel dB₁' und dB₂' oberhalb der ersten Deckschicht 1 gleich, obwohl die erste Schallquelle SQ₁ einen sehr viel höheren Schalldruck erzeugt als die rechts angeordnete zweite Schallquelle SQ₂.

Auf diese Weise kann das Geräuschniveau oberhalb der Sandwichplatte unabhängig von den unterhalb der Sandwichplatte befindlichen Schallquellen auf ein angenehmes Maß reduziert und vergleichmäßigt werden. Dadurch ergibt sich durch den Einbau der erfindungsgemäßen Sandwichplatte in einem Schienenfahrzeug über die gesamte Länge des Schienenfahrzeugs ein gleichbleibend niedriger Schallpegel, was sich unmittelbar auf das Komfortempfinden und das Wohlbefinden der Passagiere und des Zugbegleitpersonals beziehungsweise des Zugführers auswirkt.

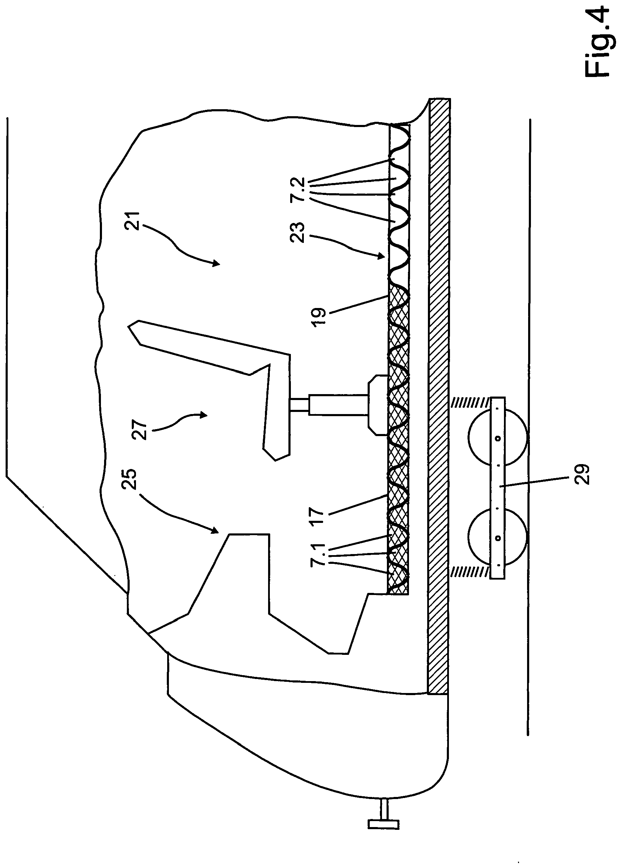

In Figur 4 ist das Ausführungsbeispiel gemäß Figur 3 in einem Schienenfahrzeug integriert dargestellt. Figur 4 zeigt einen Teillängsschnitt durch den Fahrzeugführerraum 21 mit einer erfindungsgemäßen Fußbodenplatte 23.

Die eigentliche Tragstruktur sowie die Drehgestelle des Schienenfahrzeugs sind nicht dargestellt. In dem Fahrzeugführerraum 21 sind neben der Fußbodenplatte 23 ein Fahrpult 25 sowie ein Stuhl 27 für den nicht-dargestellten Fahrzeugführer vorhanden. Unterhalb des Fahrzeugführerraums 21 befindet sich ein Drehgestell 29, das eine Schallquelle darstellt.

Um das Geräuschniveau im Fahrzeugführerraum 21 auf ein angenehmes Maß zu senken, sind in dem in Figur 4 linken Teil der Fußbodenplatte 3 die Hohlräume 7.1 mit einem schallabsorbierenden Material gefüllt.

In dem in Figur 4 rechten Teil des Fahrzeugführerraums 21 ist keine Schallquelle vorhanden, so dass dort die Hohlräume 7.2 der Fußbodenplatte 3 nicht mit einem schallabsorbierenden Material gefüllt sind.

## Patentansprüche

1. Sandwichplatte mit mindestens einer Deckschicht (1) und einer mit der mindestens einen Deckschicht (1) verbundenen Kernschicht (5), wobei die Kernschicht (5) voneinander abgetrennte Hohlräume (7) aufweist, und mindestens ein Teil (7.1) der Hohlräume
(7) mit einem schallabsorbierenden Material gefüllt ist, **dadurch gekennzeichnet, dass** als schallabsorbierendes Material ein Granulat aus einem feuerfesten Material, bevorzugt aus Sand eingesetzt wird.

2. Sandwichplatte nach Anspruch 1, **dadurch gekennzeichnet, dass** eine zweite Deckschicht (3) vorgesehen ist, und dass die zweite Deckschicht (3) mit der Kernschicht (5) verbunden ist.

3. Sandwichplatte nach Anspruch 1 oder 2, **dadurch gekennzeichnet, dass** eine zweite Kernschicht (5.2) und eine Trennschicht (9) vorgesehen sind, und dass die zweite Kernschicht (5.2) voneinander abgetrennte Hohlräume (7) aufweist, und dass mindestens ein Teil (7.1) der Hohlräume (7) in der zweiten Kernschicht (5.2) mit einem schallabsorbierenden Material gefüllt sind.

4. Sandwichplatte nach einem der vorhergehenden Ansprüche, **dadurch gekennzeichnet, dass** die Deckschichten (1, 3), die Kernschichten (5, 5.1, 5.2) und/oder die Trennschicht (9) aus einem metallischen Werkstoff, bevorzugt aus Aluminium oder Stahl, besteht.

5. Sandwichplatte nach einem der vorhergehenden Ansprüche, **dadurch gekennzeichnet, dass** mindestens die mit einem schallabsorbierenden Material aufgefüllten Hohlräume (7.1) an ihren Enden verschlossen sind.

6. Sandwichplatte nach Anspruch 5, **dadurch gekennzeichnet, dass** die Hohlräume (7.1) mit einer Verschlussleiste (8) oder Verschlussstopfen verschlossen sind.

## Claims

1. A sandwich plate with at least one cover layer (1) and a core layer (5) connected with the at least one cover layer (1), wherein the core layer (5) comprises cavities (7) separated from one another, and at least one part (7.1) of the cavities (7) is filled with a sound-absorbing material, **characterized in that** granulate made from a fireproof material, preferably made from sand, is used as sound-absorbing material.

2. A sandwich plate according to Claim 1, **characterized in that** a second cover layer (3) is provided, and that the second cover layer (3) is connected with the core layer (5).

3. A sandwich plate according to Claim 1 or 2, **characterized in that** a second core layer (5.2) and a separation layer (9) are provided, and that the second core layer (5.2) has cavities (7) separated from one another, and that at least one part (7.1) of the cavities (7) in the second core layer (5.2) are filled with a sound absorbing material.

4. A sandwich plate according to any one of the preceding claims, **characterized in that** the cover layers (1, 3), the core layers (5, 5.1, 5.2) and/or the separation layer (9) consists of a metallic material, preferably of aluminum or steel.

5. A sandwich plate according to any one of the preceding claims, **characterized in that** at least the cavities (7.1) filled with a sound-absorbing material are closed at their ends.

6. A sandwich plate according to Claim 5, **characterized in that** the cavities (7.1) are closed with a closure strip (8) or closure plug.

## Revendications

1. Plaque sandwich avec au moins une couche de couverture (1) et une couche de coeur (5) reliée avec l'au moins une couche de couverture (1), la couche de coeur (5) comprenant des cavités (7) séparées les uns des autres et au moins une partie (7.1) des cavités (7) étant replie d'un matériau insonorisant, **caractérisée en ce que** le matériau insonorisant est un granulat constitué d'un matériau résistant au feu, de préférence de sable.

2. Plaque sandwich selon la revendication 1, **caractérisée en ce qu'**une deuxième couche de couverture (3) est prévue, et **en ce que** la deuxième couche de couverture (3) est reliée avec la couche de coeur (5).

3. Plaque sandwich selon la revendication 1 ou 2, **caractérisée en ce qu'**une deuxième couche de coeur (5.2) et une couche de séparation (9) sont prévues, et **en ce que** la deuxième couche de coeur (5.2) comprend des cavités (7) séparées les uns des autres et **en ce qu'**au moins une partie (7.1) des cavités (7) dans la deuxième couche de coeur (5.2),sont remplies d'un matériau insonorisant.

4. Plaque sandwich selon l'une des revendications précédentes, **caractérisée en ce que** les couches de couverture (1, 3), les couches de coeur (5, 5.1, 5.2) et/ou la couche de séparation (9) sont constituées d'un matériau métallique, de préférence d'aluminium ou d'acier.

5. Plaque sandwich selon l'une des revendications précédentes, **caractérisée en ce qu'**au moins les cavités (7.1) remplies d'un matériau insonorisant sont fermées à leurs extrémités.

6. Plaque sandwich selon la revendication 5, **caractérisée en ce que** les cavités (7.1) sont fermées avec une baguette de fermeture (8) ou avec des bouchons de fermeture.
